# EUROPEAN PATENT SPECIFICATION

(11) **EP 2 416 246 B1**
(45) Date of publication and mention of the grant of the patent: **15.07.2015**
(21) Application number: 11174778.8
(22) Date of filing: 21.07.2011
(51) Int. Cl.: G06F 9/48, G06F 9/52

(54) **Extensibility of business process and application logic**
Erweiterbarkeit eines Geschäftsprozesses und Anwendungslogik
Extensibilité de procédé commercial et logique d'application

(30) Priority: 30.07.2010 US 847142
(43) Date of publication of application: 08.02.2012
(73) Proprietor: SAP SE, 69190 Walldorf (DE)
(72) Inventor: Dentzer, Ralf, 69190 Walldorf (DE); Bohlmann, Karsten, 69190 Walldorf (DE); Kusterer, Stefan, 69190 Walldorf (DE); Mock, Frank, 69190 Walldorf (DE); Nottbohm, Klaus, 69190 Walldorf (DE); Stein, Tobias, 69190 Walldorf (DE)
(74) Representative: Richardt Patentanwälte PartG mbB

(56) References cited:
- Loesgen B: "A Messaging-based State Machine Design Pattern, using BizTalk Server", Internet citation, 27 October 2005 (2005-10-27), pages 1-3, XP002666195, Retrieved from the Internet: URL:http://www.brianloesgen.com/blog/2005/ 10/27/a-messaging-based-state-machine-desi gn-pattern-using-biztalk.html?printerFrien dly=true [retrieved on 2011-12-20]

## Description

### BACKGROUND

Organizations use enterprise resource planning (ERP), customer relationship management (CRM), and other business management systems to manage business processes and workflows. These systems may include various subcomponents to manage different tasks in a workflow. For example, an order management system may generate an order form, supply the form to a prospective purchaser, and process the completed form submitted by the purchaser. A delivery management system may instruct an entity to initiate delivery of the ordered items in the completed order form and track the status of the order items throughout the delivery process.

Each of these subcomponents may be wholly independent from each other, in that the subcomponents may not directly communicate with each other. Thus, in the above example, the order management system may not directly communicate with the delivery management system. Although these subcomponents may not directly communicate, a business workflow may still require tasks and functions to be completed in a specific order. For example, an order form may have to be completed and processed before goods may be delivered.

To preserve order and continuity in the workflow, each of the subcomponents may update a status field of a object in a database. Once a subcomponent has completed its assigned tasks on an object, the subcomponent may update the status field for the object in the database accordingly. A second subcomponent in the workflow may be configured to check the status field of objects in the database and begin processing objects with a status field indicating that the prior subcomponent in the workflow has been completed. This ensures that the second subcomponent is not processed out of sequence.

"A messaging-based State Machine Design Pattern, using BizTalk Server", Internet citation, 27 October 2005, pages 1-3, XP002666195 retrieved from the URL http://www.brianloesgen.com/blog/2005/10/27/a-messaging-based-state-machine-desigin-pattern-using-biztalk.html?pringerFriedly=true [revised on 2011-12-20] describes a publish/subscribe mechanism according to which a message has a Status field which is promoted. The Status field becomes a routable field making it visible to the publish/subscribe mechanism.

### Summary

The invention provides an improved computer implemented method, computer system and computer program product for execution of computational tasks in a highly flexible and adaptable manner facilitating loose coupling between the system components as claimed in the independent claims. Embodiments of the invention are given in the dependent claims.

A 'state machine' as understood herein is a computer program or program component being executed by one or more microprocessor and that is composed of a finite number of states, transitions between those states, and actions that are performed when certain conditions are met. The state machine has an internal memory and an input for receiving a signal, such as a request.

The term 'loose coupling' as understood herein comprises any form of coupling between program components that enables asynchronous sequential execution of the program components for implementation of a service oriented architecture, i.e. the completion of the execution of a first program component does not directly start execution of a second program component but the start of the execution of the second program component is triggered otherwise by merely using the completion of the first program component as a necessary condition.

The term 'web service' as understood herein comprises the web services architecture as specified by the W3C working group.

The term 'web services push message' as understood herein comprises any push service implemented by a web service.

Embodiments of the invention are particularly advantageous as a degree of freedom is provided to perform an extension of the computational task performed by the first program component while preserving the option of not performing such an extension; this degree of flexibility may be accomplished by minimal modifications of the core system. Furthermore, this additional flexibility causes only a minimal delay.

The flexibility is provided by coupling the first program component performing the computational task and the second program component that performs a consecutive further computational task by means of the state machine that loosely couples these first and second program components through a database in which a status and a precursor of the status that precedes the status are stored. This facilitates delivery of a standardized computer system to a customer which may be adapted to the customer's needs by adding an extension of the computational task performed by the first program component with minimal adaptations to the core system and providing loose coupling between the second program component and the first program component.

In accordance with embodiments of the invention a data processing system is provided that is constituted by multiple computer systems that are arranged in a cascade. This enables distributed data processing using a service oriented architecture for maximum flexibility, load distribution and avoidance of a single point of failure.

Embodiments of the invention are particularly advantageous as user-specific process modifications of existing process management systems that are independent of system upgrades and integrations are facilitated.

### BRIEF DESCRIPTION OF THE DRAWINGS

FIG. 1a shows an existing process management workflow.
FIG. 1b shows an exemplary embodiment of the invention.
FIG. 2 shows exemplary approval process workflow in an embodiment.
FIG. 3 shows exemplary status changes in a hierarchical approval process workflow.
FIG. 4 shows an exemplary embodiment of the invention in a order management process workflow.
FIG. 5 shows an exemplary flow of data between systems in an embodiment.
FIG. 6 shows an exemplary method in an embodiment.
FIG. 7 shows an embodiment of systems coupled to each other through a network.
FIG. 8 shows a block diagram of an embodiment of a computer system of the invention,
FIG. 9 shows a flowchart being illustrative of computational processes that are performed by the computer system of Fig. 8,
FIG. 10 is a block diagram of a data processing system comprising multiple cascaded computer systems of the type of Fig. 8.

Throughout the following description of the various embodiments of the invention identical reference numerals are used for like or identical elements.

### DETAILED DESCRIPTION

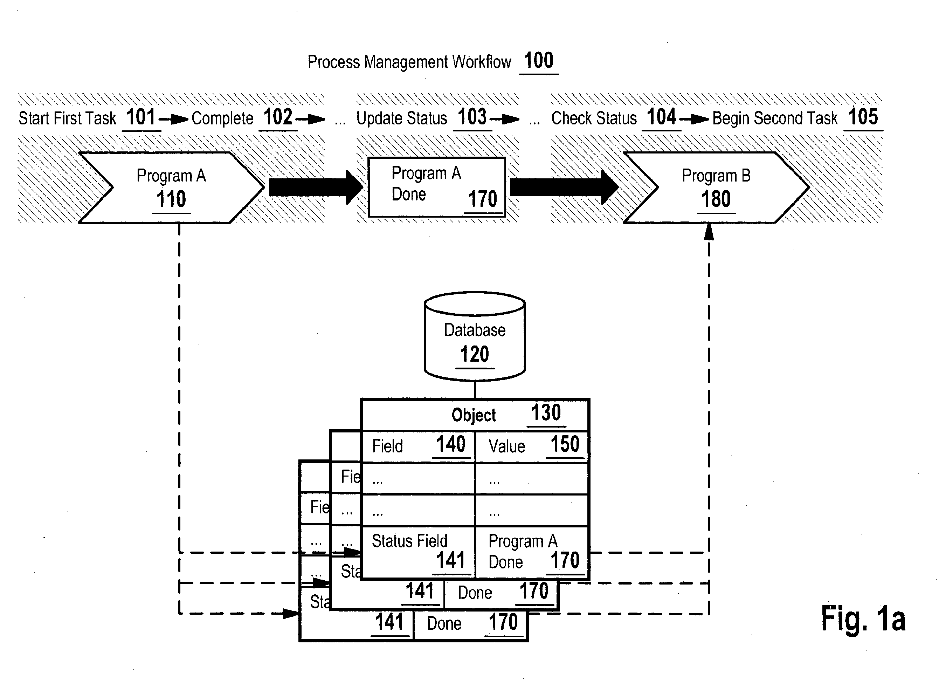

FIG. 1a shows a process management workflow 100. In this workflow, a first program A 110 may be designed to perform a sequence of tasks, such as initiating a first task 101 in response to a stimulus, performing the first task 102 on an object, and then updating the status in a status field 141 of the object. The status field 141 of the object may be updated to indicate whether the first task was successfully completed 170.

Program A 110 may be independent of the second program, program B 180, which may be designed to perform a sequence of other tasks, such as checking the status field 141 of objects, and initiating and completing a second task 105 when the status field 141 indicates that program A 110 was successfully completed. This may ensure that program B 180 is not completed before program A 110 and that the processing order of tasks in the workflow is maintained even though the programs A 110 and B 180 do not directly communicate.

Many existing business process management systems include the functionality shown in FIG. 1a. However, some users of these existing systems may have additional workflow processes that they would like to perform that are not included in the generic system. For example, users in some countries may have additional locality-specific compliance checks that need to be performed between different tasks and programs in the system. Other users may have specific processes unique to their organization that they would like to perform.

Users wanting to include additional user-specific processes have had to modify the existing systems to include the additional functionality. However, these user-specific modifications have also caused complications when upgrading business management systems or when integrating other systems with the business management systems. Complications may occur because the upgrading and/or integration process may either overwrite the user-specific modifications or may result in an incompatibility between the functionality offered in the new systems with the modifications previously made to the existing system.

A core system may include different program components to perform tasks in a workflow sequence according to a status of an object recorded in a database status field. In an embodiment of the invention, the recorded status of a task may be modified from a completed status to a partially completed status when the task in the core system is successfully completed. An action management system may be used to perform additional processes and tasks on objects with the partial completion status. Once the additional processes and tasks are completed, the recorded status may be further modified to the original completed status so that other program components in the core system depending on the original completed status may continue to operate.

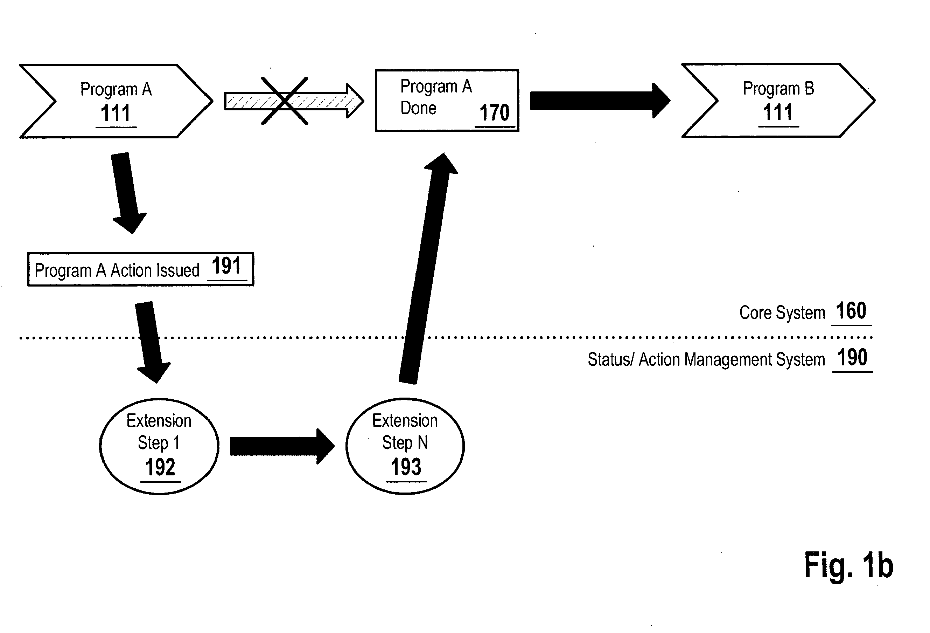

FIG. 1b shows an exemplary embodiment of the invention. In this embodiment, a core system 160 may include different program components 111, such as programs A and B that perform different tasks in a workflow. Each of the programs A and B 111 may be independent of each other in that the programs A and B do not directly communicate. To ensure that tasks are processed sequentially according to a predetermined workflow, a status field 170 of an object may be updated when each program is successfully completed on the object. Instead of updating the status field 170 to record the successful completion of program A 111 on an object with the exemplary status "Program A Done", the core system may modified to record the successful completion of Program A 111 on the object with a partial completion status, such as "Program A Action Issued" 191. In some instances, this may be the only modification to the core system 160 necessary to use the claimed invention. By minimizing the modifications to the core system 160, modifications, upgrades, and additions to the core system 160 may be more readily and efficiently integrated.

A separate status/action management system 190 may also be included in an embodiment. The action management system 190 may include functionality to check on the status of object and perform additional processing on objects depending on the current status of the object. For example, the action management system 190 may use push or pull technologies, such as HTTP server pushes, Java® pushlets, and RSS feeds, to check for status field updates.

Objects with different statuses may cause different processes to be performed. For example, once the action management system 190 becomes aware that an objects has the modified program A completion status "Program A Action Issued" 190, the action management system 190 may initiate a series of additional processes, shown as extension steps 1 to N 192. Once these additional extensions steps 1 to N 192 have been successfully completed, the action management system 190 may change the status field of the object back to the original completion status "Program A Done" 170 so that the next program B 111 in the workflow, which may only initiate for objects with the original completion status "Program A Done" 170, may begin. Although the status field may be updated with a variety of status indicators, using the original status indicator triggering the next program in the core system 160 workflow eliminates the need to reconfigure the next program in the workflow to respond to a revised status indicator.

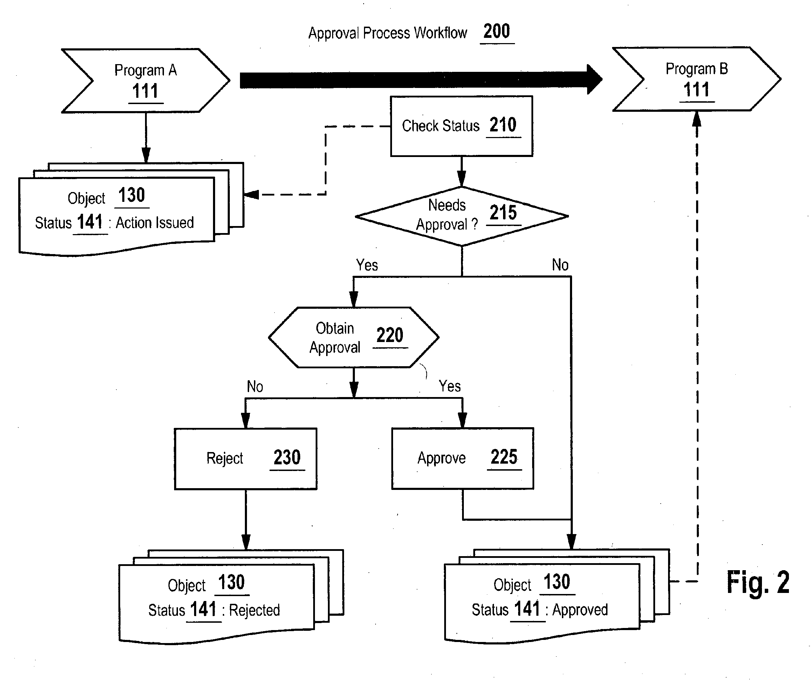

In some embodiments, the action management system may include an approval process to determine when an object's status should reflect full completion of a program to enable a subsequence program in a workflow to commence. FIG. 2 shows exemplary approval process workflow in an embodiment. In this embodiment, when program A 111 in the core system 160 has finished performing its processes on object 130, it may send a partial completion "Action Issued" status to be stored in status field 141 of object 130 in a database.

In box 210, an action management system 190 may synchronously or asynchronously check for updated status field in the database or receive updated status field information from the database.

After checking the status fields in the database for objects with a partial completion status, in box 215 the system may determine whether the object needs further approval before the next program may commence. This determination may be through a programming logic specifying conditions requiring further approval, such as a request for expenditures over $X require approval. Other forms of programming logic, such as, a lookup table may be used to match objects, programs, and/or other approval criteria to determine whether additional approval is needed.

If no further approval is necessary, the status field 141 of the object 130 in the database may be updated to indicate that the object has been approved and/or approval is not necessary for the next program, program B 111, in the sequence to commence.

If, however, additional approval is necessary, in box 220, the system may follow a set of preprogrammed process steps to obtain the necessary approval. For example, if the approval process requires obtaining a permit, license, or other form of regulatory or supervisory approval, the system may electronically: extract the data required to obtain the approval from the organization's computing systems and/or databases, structure the data in a format recognized by the third party approver, send the structured data to the third party approver, and process a received decision of the third party approver.

If the processed decision indicates that the request for approval has been rejected, then in box 230, the action management system 190 may instructions to the database to update the status field 141 of the object 130 to rejected. If the processed decision indicates that the request has been approved, then in box 225 the action management system 190 may instruct the database to update the status field 141 of the object 130 to indicate approval. Instead of merely recording approval or rejection, the action management system 190 may also be configured to store additional data received from a third party approver in the database or other organizational computing system. For example, if the third party approver send an approval number, confirmation code, or license number, instead of or in addition to an express approval, the action management system 190 may be configured to extract this information from the response and update the organization's computing systems with the information.

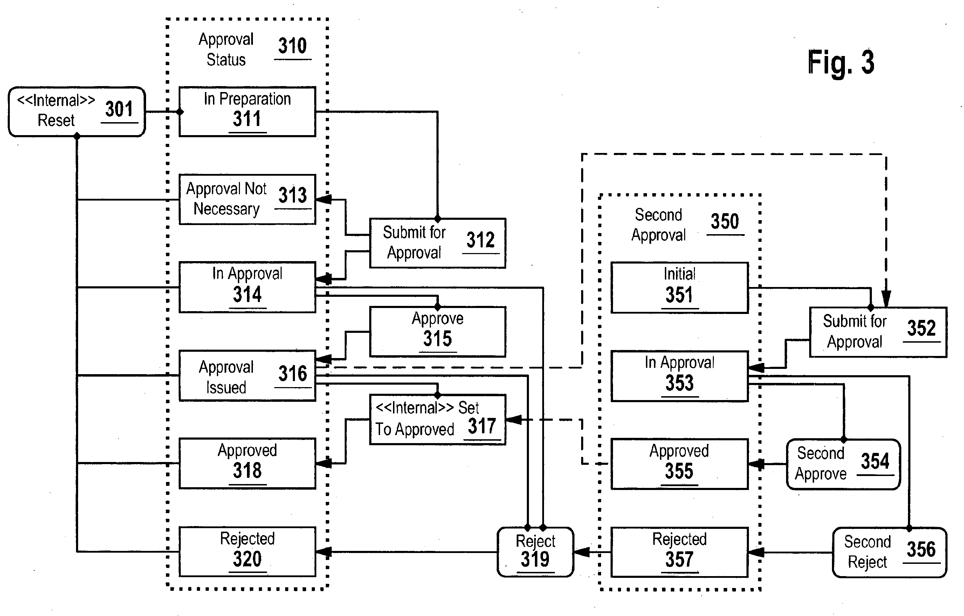

FIG. 3 shows exemplary status changes in a hierarchical approval process workflow of an embodiment including first and second level approval fields 310 and 350, respectively. In box 301, the approval process system may be reset. The approval status field 310 may be initially set in preparation 311, as preliminary steps of a program are executed. Once steps in the process requiring approval have been reached, an approval request may be submitted for approval.

After submission, the approval request may be electronically processed, and a decision may be made through a lookup table and/or other processing logic whether additional approval is necessary. If no additional approval is necessary, the status field 310 may be updated to indicate Approval Not Necessary 313 and the approval process may terminate. If additional approval is necessary, the approval request may be forwarded to the appropriate approval authority, which may be determined through the aforementioned processing logic. The status field 310 may be updated to indicate that the approval is underway 314.

If the first approval authority approves 315 the request, in box 316 the approval may be recorded in the status field of the object in the database. The aforementioned processing logic may be used to determine whether additional approval is necessary. If additional approval is needed, then in box 352, a request for additional approval may be sent to the designated secondary approval authority. The second approval status field 350 may be changed from an initial value 351 to reflect the in approval 353 status. Once the secondary approver approves the request 354, the status may be updated to approved 355, which may result in the processing logic 317 to update the status of the approval field 310 to approved 318.

If the secondary approver rejects 356 the request, then the second approval status field 350 may be changed to rejected. A rejection process 319 may update the status 310 to rejected 320 when either the second approval status field is rejected or the first approver rejects the request.

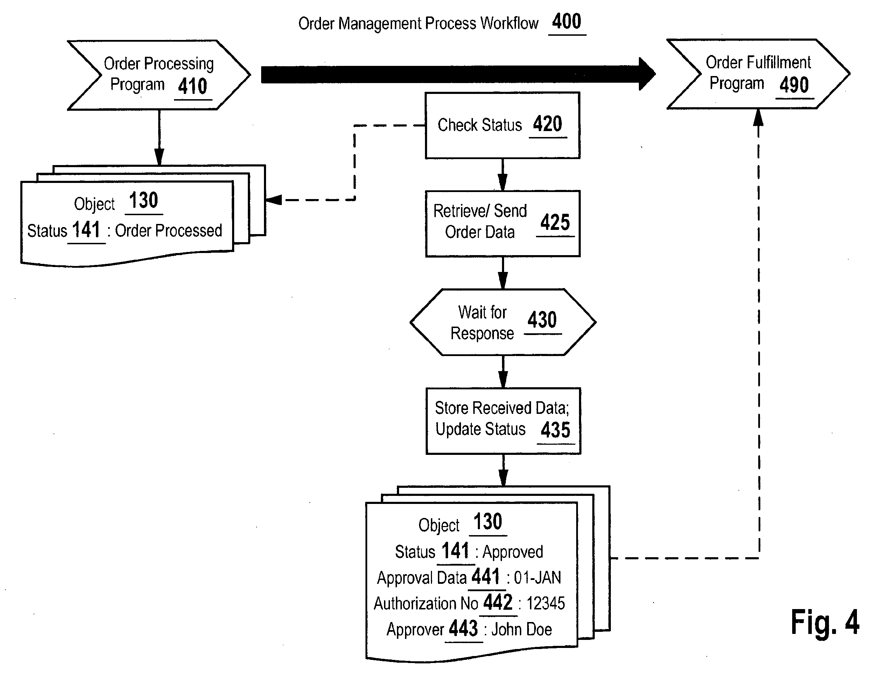

FIG. 4 shows an exemplary embodiment of the invention in an order management process workflow 400. In this embodiment, once an order processing program 410 has finished processing an electronic order for goods or services, the program 410 may send instructions to a database to update the status field 141 of the corresponding order object 130 to a partially complete status, such as order processed.

In box 420, the action management system 190 may periodically check the status field 141 of objects 130 in the database. When the action management system 190 identifies objects with status fields 141 indicating order processed, the action management system 190 may retrieve data relating to the order from the organization's computing systems, restructure the information into a third-party compatible format, and send the data to the third party for further processing 425.

For example, the action management system may extract credit card information and billing information, restructure the information into format required by a credit card processor, and send the information to the credit card processor. Alternatively, the action management system may extract order information, restructure the order information in a format required by a regulatory authority, and send the information to the regulatory authority to obtain a license, permit, or other authorization.

The system may wait 430 for a response from the entity to whom the extracted data was sent. Once a response is received, data included by the entity in the response may be stored in an organization's computing systems and the status of the object in the database may also be updated 435. For example, if a processed order was sent to a third party for approval, the third party may send back an authorization number 442, in this case 12345, and a name of a person approving the order 443, in this case John Doe. This information, along with the date 441 the approval was received may also be stored in corresponding fields of the object 130 in the database. Additionally, the status field 141 of the object 130 may also be updated to indicate that the order was approved.

Once the status field 141 of the object 130 indicates that the order has been approved, the logic in the workflow 400 may enable the order fulfillment program 490 to commence in order to begin preparing and shipping the order to the customer.

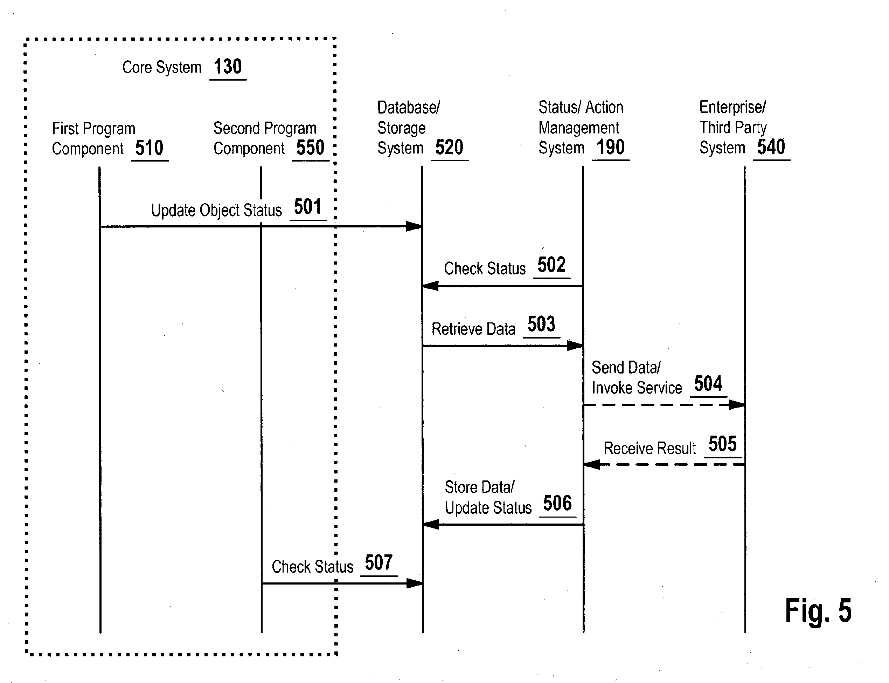

FIG. 5 shows an exemplary flow of data between systems in an embodiment. A core system 160 may include two or more program components, including first and second components 510 and 520. Each of the program components may be independent of each other and may not directly communicate with each other.

The first program component may send an update status of an object 501 to a database system 520 when the first program component successfully processes the object. An action management system 190 may periodically check or receives status updates 502 from the database system 520. When the action management system 190 identifies objects with a status indicating that the first program component 510 has successfully completed, the action management may retrieve data 503 related to the first program component 510 from the database system 520.

In some embodiments where the action management system 190 is configured to interact with third party systems, the action management system 190 may reformat the data and send the data 504 to a third party system 540. The third party system may invoke a service to further process the data sent from the action management system 190. Once the third party system 540 has finished its processing on the data, it may send a result of the further processing to the action management system. The action management system may receive the result 505, and then send the result and a status update 506 based on the result to the database system 520 to be stored.

The action management system 190 may also perform other processing functions on objects and send updates to the database system 520 when the updates are complete.

The second program component 550 may periodically send update requests to or receive update requests from the database system 520 to determine whether the status of any objects have been updated by the action management system 190 to indicate successful completion of any processing functions on the object by the action management system 190. Once the second program component 550 identifies objects with a status indicating successful completion of processing functions, the second component 550 may begin executing its processing functions on the identified objects.

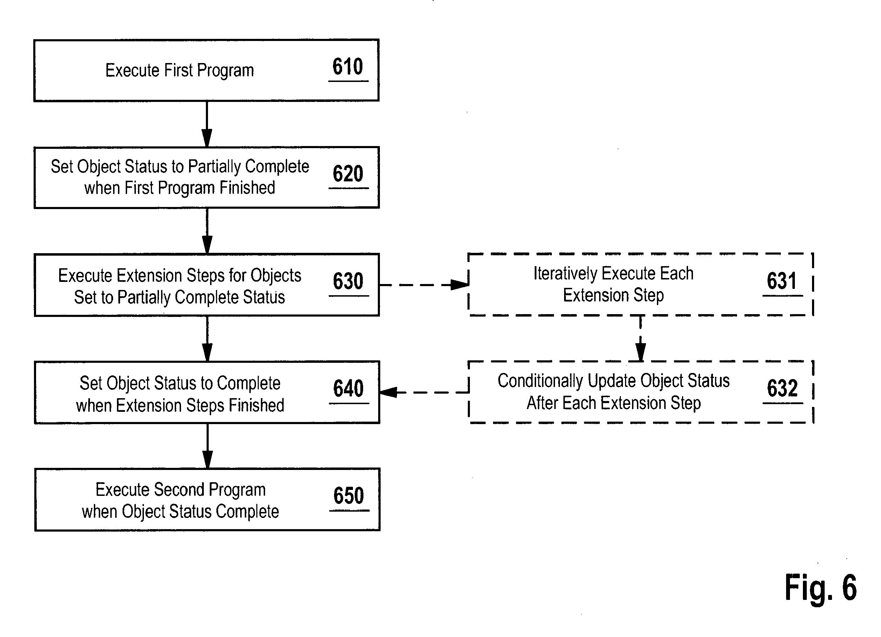

FIG. 6 shows an exemplary method in an embodiment. In box 610, a first program in a core system may be executed. The first program may apply processing functions to an object in order to complete a first task in a workflow involving the object.

In box 620, a status field of the object in a database may be set to partially complete when the first program is successfully completed.

In box 630, an action management system 190 may periodically check the status fields of object in the database and perform additional, user-customized processing functions on the objects with a partially complete status set by the first program.

In some embodiments, where the additional processing functions includes multiple extension steps, in box 631 the multiple extension step functions may be iteratively executed and in box 632 the status field of the object may be conditionally updated after each extension step is executed.

In box 640, the action management system 190 may set the object status to complete when the extension sets are finished.

In box 650, a second program in the core system may check on or receive updates of the status of objects in the database. The second program may apply its processing functions on objects having a complete status set by the action management system.

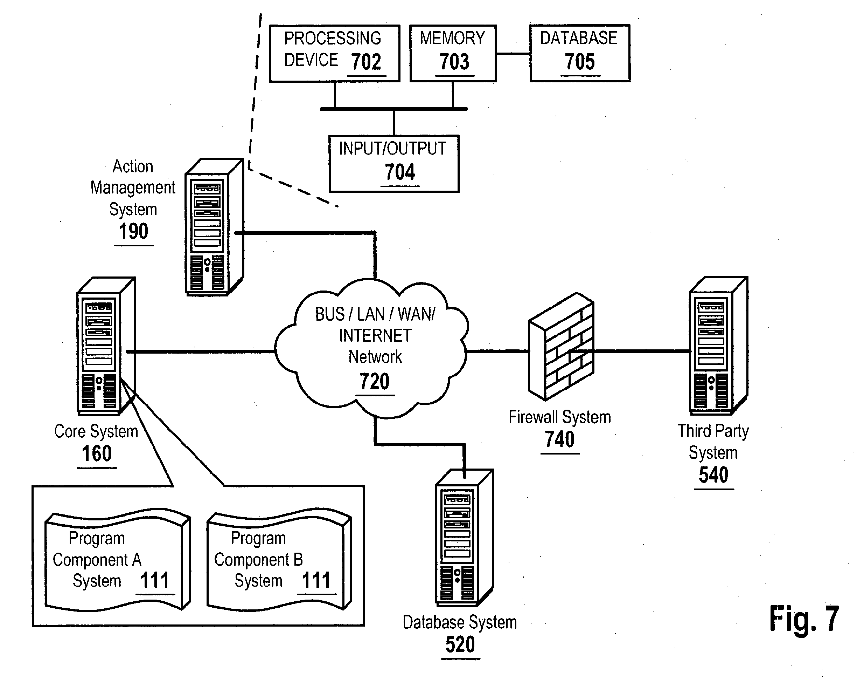

FIG. 7 shows an embodiment of an action management system 190 coupled to a core system 160, database system 520, and enterprise or third party system 540 through a network 750. In an embodiment, the core system 160 may include two or more programming components 111 (shown as program components A and B). Each of the program components may be on separate, independent computing systems forming a core system, or the components 111 may be consolidated or integrated into a single core system 160.

The third party system 540 may be connected to a firewall system 740 that may prevent the third party system 540 from directly accessing other systems of the organization, including the action management system 190, core system 160, and database system 520. If the third party system 540 is under the control of the organization or is managed by a trusted third party, then it may bypass the firewall system 740 so that it may directly access the other systems of the organization.

Each of the systems in FIG. 7 may contain a processing device 702, memory 703 containing a database 705, and an input/output interface 704, all of which may be interconnected via a system bus. In various embodiments, each of the systems 190, 160, 740, 540, 111, and 520 may have an architecture with modular hardware and/or software systems that include additional and/or different systems communicating through one or more networks. The modular design may enable a business to add, exchange, and upgrade systems, including using systems from different vendors in some embodiments. Because of the highly customized nature of these systems, different embodiments may have different types, quantities, and configurations of systems depending on the environment and organizational demands.

In an embodiment, memory 803 may contain different components for retrieving, presenting, changing, and saving data. Memory 803 may include a variety of memory devices, for example, Dynamic Random Access Memory (DRAM), Static RAM (SRAM), flash memory, cache memory, and other memory devices. Additionally, for example, memory 803 and processing device(s) 802 may be distributed across several different computers that collectively comprise a system.

Processing device 802 may perform computation and control functions of a system and comprises a suitable central processing unit (CPU). Processing device 802 may comprise a single integrated circuit, such as a microprocessing device, or may comprise any suitable number of integrated circuit devices and/or circuit boards working in cooperation to accomplish the functions of a processing device. Processing device 802 may execute computer programs, such as object-oriented computer programs, within memory 803.

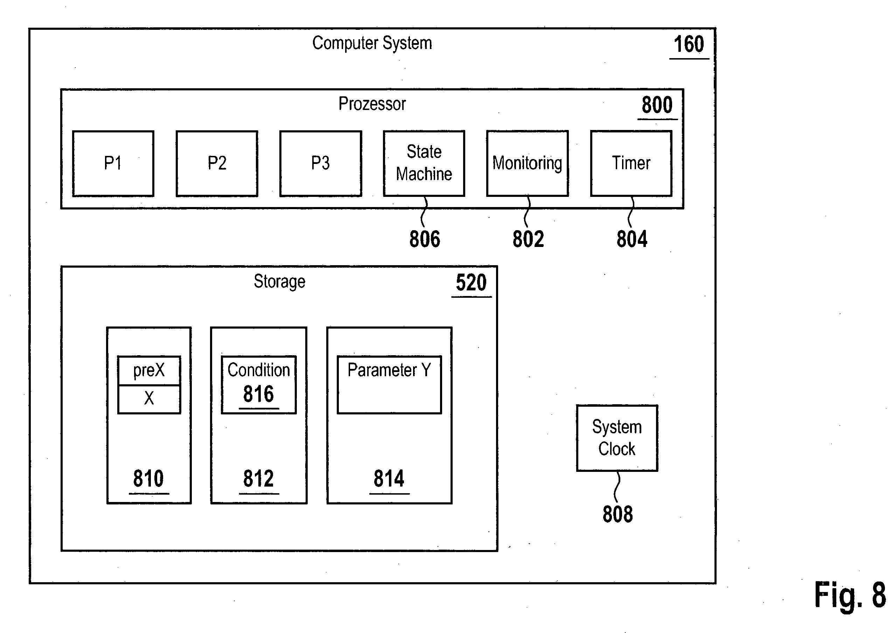

Fig. 8 shows a block diagram of a computer system 160 that is analogous to the core systems 130 and 160 of the Fig. 5 and Fig. 7 embodiments. The computer system 160 comprises storage means 520 that may implement a database/storage system 520 analogous to the embodiments of Figs. 5 and 7.

The computer system 160 has at least one microprocessor 800 for execution of the computer programs P1, P2, P3, a monitoring program 802, a timer 804 and a state machine 806.

The program P1 is analogous to program A, program P2 is analogous to program B and program P3 is analogous to extension steps 1 to N of the previous embodiments.

Further, the computer system 160 has a system clock 808 that provides a time reference for the timer 804.

The storage means 520 serves for storage of a database that comprises various database tables such as database tables 810, 812 and 814.

The database table 810 serves for storage of a status X that indicates completion of the execution of program P1 and of program P3 if execution of program P3 is required. Storage of the status X in the database table 810 is a necessary precondition for starting execution of program P2. Before the status X can be set a precursor of this status 'preX' needs to be set in the database table 810.

If conditional execution of the extension provided by the program P3 is desired, a respective condition 816 needs to be stored in the database table 812. The condition 816 may have the form of a Boolean term and may require one or more input parameters for evaluation of the condition 816. Evaluation of the condition 816 may return the value 'true' or 'false' depending on the value of the one or more parameters, such as a parameter Y.

The database table 814 may serve for storage of parameter values that may be required for evaluation of the condition 816, such as the parameter value for Y.

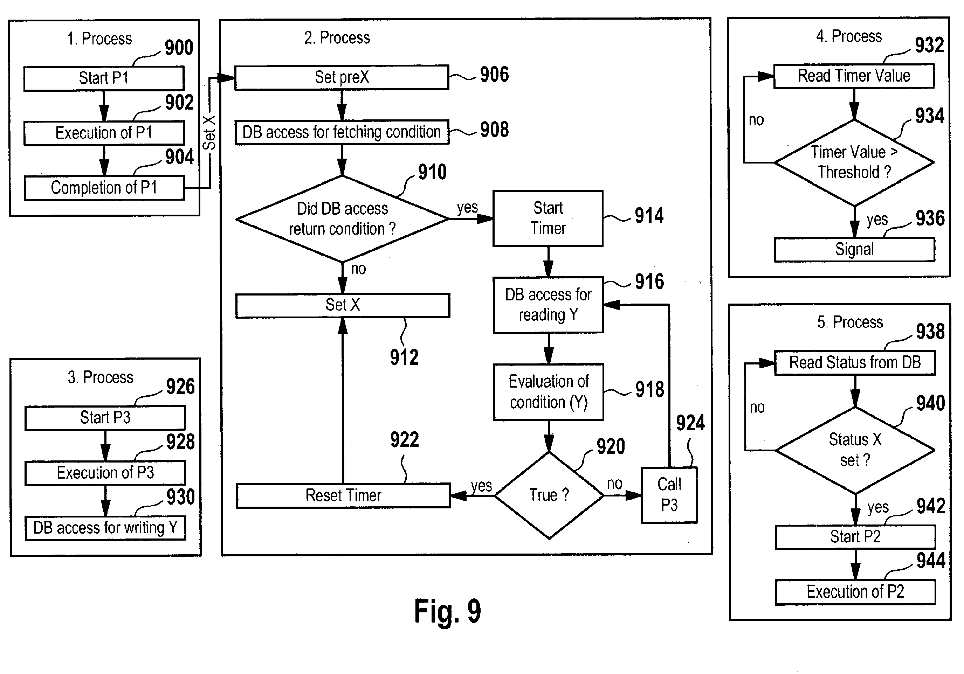

In operation the computer system 160 performs five processes as explained in detail with respect to Fig. 9.

The first process comprises the step 900 in which the program P1 is started for execution of a computational task in the following step 902. Upon completion of the execution of program P1 in step 904 a request is generated for setting the status X in order to indicate that the execution of the computational task has been completed. This request is sent from the program P1 to the state machine 806 which triggers the second process.

In step 906 of the second process the state machine performs a write access to the database table 810 in order to write the status preX rather than the status X into that database table. In step 908 the database access is performed by the state machine 806 in order to make an attempt for fetching a condition that is assigned to the task that has been executed in the first process. In step 910 a determination is made whether this database access did return a condition or not. If no condition is returned this indicates that no extension steps are required such that the status X is set in step 912 by performing a respective database write operation by the state machine 806. In the opposite case the timer 808 is started in step 914 and a database access for reading the parameter values that are required for evaluation of the condition that has been fetched in step 908 is performed in step 916, such as for reading the parameter value of Y. In step 918 the condition is evaluated using at least the value of Y that has been read in step 916. In step 920 a determination is made whether the evaluation of the condition has returned 'true'. If this is the case the condition is already fulfilled without requiring performance of extension steps, such that the timer is reset in step 922 and the control goes to step 912 for setting the status X.

If the condition returns 'false' the control goes from step 920 to step 924 where execution of the third process is invoked and from there back to step 916.

In the third process the extension steps are executed by performance of the program P3 which is started in step 926 and executed in step 928 whereby the value of Y and/or other parameters is modified. In step 930 a database access is performed to the database table 814 in order to write the modified value of Y. Hence, the repeated execution of the loop formed by steps 916, 918, 920 and 924 in the second process may be terminated if the evaluation of the condition in step 918 returns 'true' due to such a modification of the value of the parameter Y.

In order to prevent an endless loop a fourth process is invoked in step 914 by the starting of the timer 804. In the fourth process the timer value is read in step 932 and a determination is made in step 934 whether the timer value is above a predefined threshold value. If this is not the case the control goes back to step 932; otherwise a signal is generated in step 936 that indicates a time-out. This signal may be displayed on a computer monitor in order to inform an operator which may then take corrective action.

The fifth process is loosely coupled to the first process via the status X that may or may not be stored in the database table 810. In step 938 a read access to the database table 810 is performed in order to check in step 940 whether the status X has been set or not. If the status X has been set, the program P2 is started in step 942 for execution of a further computational task in step 944.

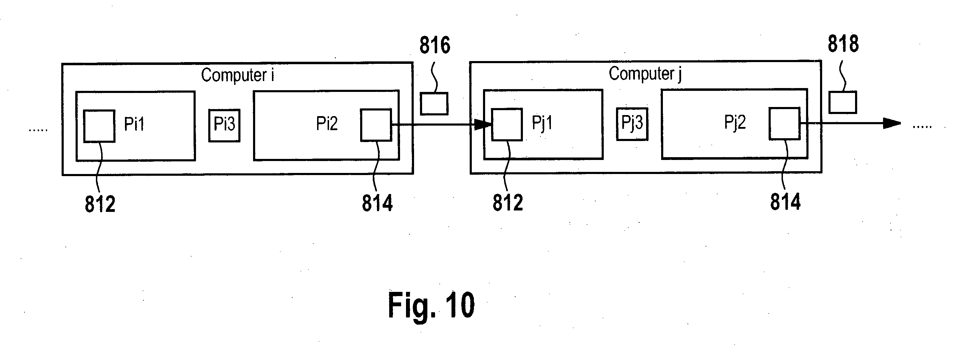

Fig. 10 shows a data processing system that is constituted by multiple cascaded computer systems of the type of computer system 860 of the Fig. 8 and 9 embodiments, such as computer i and computer j that are consecutive elements of the cascade. The computer i has a program Pi1 that corresponds to the computer program P1, computer program Pi2 that corresponds to P2 and computer program Pi3 that corresponds to computer program P3. The same applies analogously to the computer j and the other computers not shown in Fig. 10 that constitute the data processing system. The computer program Pi1 and Pi2 as well as Pj1 and Pj2 and the corresponding computer programs of the other computers of the cascade have web services interfaces 812 and 814. The web services interface 814 of a preceding one of the computers of the cascade is coupled to the web services interface 812 of the consecutive computer system thereby forming the cascaded arrangement of the computers, as shown in Fig. 10 with respect to the computers i and j.

Upon completion of the further computational task the program Pi2 sends a web services push message 816 with an input value to the next element of the cascade, i.e. the web services interface 812 of program Pj1 of the next element of the cascade which triggers execution of Pj1 (cf. step 900 of Fig. 9). Likewise execution of the further computational task by the program Pj2 results in sending another push message 818 to the following element of the cascade not shown in Fig. 10.

The nature of the computational tasks performed by the various computer programs of the computers that constitute the cascade may vary from computer to computer for implementation of a complex data processing operation involving multiple computational tasks. In one embodiment at least one element of the cascade implements extension steps for error checking and/or error correction such as by using an error correcting code.

A particular advantage of the data processing system of Fig. 10 is that the cascaded arrangement of multiple computers avoids a single point of failure. If one of the computer systems becomes defective it can be replaced by an equivalent replacement computer system without necessarily interrupting overall operation of the data processing system as the push messages propagate through the cascade.

The disclosed invention may be summarized as follows:
Item 1. A computer implemented method comprising first, second, third, fourth and fifth processes,
   the first process comprising:
   - executing a first program component for performing a computational task,
   - upon completion of the execution of the computational task, generating a -request to set a status indicating completion of the computational task by the first program component,
   - sending the request from the first program component to a state machine (806),
   the second process comprising:
   - receiving the request from the first program component by the state machine,
   - in response to receipt of the request from the first program component performing a write database access for writing a precursor of the status into a database table (810) by the state machine,
   - performing a database query in order to fetch a condition being assigned to the computational task from a database table (814) by the state machine,
   - determining whether the database query did return the condition,
   - if the database query did return the condition, then performing:
      a) starting a timer (804),
      b) performing a database access for reading at least one parameter value from a database table (814),
      c) evaluating the condition using the at least one parameter value,
      d) determining whether the condition is true,
      e) if the condition is true performing a write database access in order to write the status into the database table (810) and resetting the timer,
      f) if the condition is not true, invoking the third process and going back to step b),
   - if the database query did not return the condition, performing a write database access in order to write the status into the database table (810),
   the third process comprising:
   - executing a third program component for performing an additional computational task, the additional computational task resulting in a modification of at least one of the parameters (y),
   - performing a write database access by the third program component for writing the at least one modified parameter value to the database table (814),
   the fourth process and comprising
   - repetitively reading the timer value of the timer by a monitoring program component (802),
   - determining whether the timer value has reached or is above a predefined threshold value, and if so generating a signal being indicative of the fulfillment of a time-out condition to prevent an endless loop by the monitoring program component,
   the fifth process comprising:
   - repetitively performing a read operation to the database table (810) for determining whether the status has been set,
   - if the status has been set executing a second program component for performing a further computational task.
Item 2. The computer implemented method of claim 1 being executed consecutively multiple times by cascaded computers, the first program component of one computer (j) of the cascade being adapted to receive a web services push message (816) from the second program component of a computer (i) of the cascade preceding the one computer, and further comprising a step of starting the execution of the first program component for performing the computational task in response to receipt of the web services push message.
Item 3. The computer implemented method of Item 2, the additional computational task executed by the third program component comprising an error correction operation.
Item 4. The method of any one of Items 1 to 3 whereby the request comprises requesting a first update of a status field of an object, the computational task being executed in a first phase, and the precursor of the status indicating completion of the first phase, the further computational task being executed in a second phase, the method, comprising:
   transmitting over a communications network a first update of a status field of an object to the database, the update indicating completion of a first phase of a first program component in a first computing system;
   identifying, through a processing device, an object in the database having its status field indicate completion of the first phase;
   performing a processing function at a second computing system on the identified object, the processing function varying depending on the object, the first and second computing systems communicatively independent of each other;
   transmitting over the communications network a second update of the status field indicating completion of a second phase of the first program component to the database; and
   initiating a second program component in the first computing system on an object in the database having its status field report completion of the second phase, the second program component communicatively independent of the first program component and the second computing system.
Item 5. The method of any one of items 1 to 4, wherein the first phase represents a partial completion of the first program component.
Item 6. The method of any one of Items 1 to 5, wherein the second phase represents total completion of the first program component
Item 7. The method of any one of Items 1 to 6, wherein the processing function includes approving an activity performed during execution of the first program component.
Item 8. The method of any one of Items 1 to 7, the processing function further comprising:
   determining, through user-supplied processing logic, whether further approval for the activity is necessary;
   submitting an approval request for the activity to an entity according to the processing logic when approval is necessary, otherwise, updating the status field of the object to indicate no approval needed; and
   after electronically receiving an answer to the approval request from he entity, updating the status field to reflect the answer.
Item 9. The method of any one of Items 1 to 8, the processing function further comprising:
   If the answer indicates that the approval request has been approved, determining, through user-supplied processing logic, whether additional approval is needed;
   when additional approval is needed, iteratively submitting additional approval requests to entities in a hierarchical order after receiving approvals from subordinate entities;
   updating the status field to reflect rejection after receiving a first rejection; and otherwise updating the status field to reflect approval after receiving approvals from each entity in the hierarchy.
Item 10. The method of Item 8 or 9, wherein the user-supplied processing logic includes use of a lookup table.
Item 11. The method of any one of Items 7 to 10, the processing function further comprising:
   extracting data relating to the activity;
   restructuring the data into a format compatible with a third party computing system;
   sending the extracted data to the third party computing system to obtain a result of further processing of the extracted data; and
   after receiving the result from the third part computing system, storing the result in another computing system.
Item 12. The method of Item 11, further comprising transmitting a status update dependent on the result to the database.
Item 13. The method of any one of Items 1 to 12, wherein the first and the second computing systems are connected to a same network.
Item 14. The method any one of Items 1 to 13, wherein the first computing system is a core system and the second computing system is an action management system.

## Claims

1. A computer implemented method comprising first, second, third, fourth and fifth processes,
the first process comprising:
- executing (902) a first program component (510) for performing a computational task,
- upon completion of the execution of the computational task, generating a request to set a status indicating completion of the computational task by the first program component,
- sending the request from the first program component to a state machine (806),
the second process comprising:
- receiving the request from the first program component by the state machine,
- in response to receipt of the request from the first program component performing a write database access for writing (906) a precursor (preX) of the status into a database table (810) by the state machine,
- performing (908) a database query in order to fetch a condition (816) assigned to the computational task from a database table (814) by the state machine,
- determining (910) whether the database query did return the condition,
- if the database query did return the condition, then performing:
a) starting (914) a timer (804),
b) performing (916) a database access for reading the at least one parameter value from a database table (814),
c) evaluating (918) the condition using at least one parameter value,
d) determining (920) whether the condition is true,
e) if the condition is true, performing a write database access in order to write the status into the database table (810) and resetting (922) the timer,
f) if the condition is not true, invoking (924) the third process and going back to step b),
- if the database query did not return the condition, performing (912) a write database access in order to write the status into the database table (810),
the third process comprising:
- executing (928) a third program component for performing an additional computational task, the additional computational task resulting in a modification of at least one of the parameter values,
- performing (930) a write database access by the third program component for writing the at least one modified parameter value to the database table (814),
the fourth process comprising:
- repetitively reading (932) the timer value of the timer by a monitoring program component (802),
- determining (934) whether the timer value has reached or is above a predefined threshold value, and if so generating a signal being indicative of the fulfillment of a time-out condition to prevent an endless loop by the monitoring program component,
the fifth process comprising:
- repetitively performing a read operation to the database table (810) for determining whether the status has been set,
- if the status has been set executing a second program component (550) for performing a further computational task.

2. The computer implemented method of claim 1 being executed consecutively multiply times by cascaded computers, the first program component of one computer (j) of the cascade being adapted to receive a web services push message (816) from the second program component of a computer (i) of the cascade preceding the one computer, and further comprising a step of starting the execution of the first program component for performing the computational task in response to receipt of the web services push message.

3. The computer implemented method of claim 2, the additional computational task executed by the third program component comprising an error correction operation.

4. A computer system comprising a first program component (510), a second program component (550), a third program component, a state machine (806), a monitoring program component (802), a system clock (808) and a timer (804) using the system clock, storage means (520) for storing a database, and one or more processors (800) for executing the first, second, third, and monitoring program components, the state machine and the timer, the one or more processors being operable to perform a method in accordance with any one of the preceding claims.

5. The computer system of claim 4 comprising:
- a core system comprising the first and the second program components, the core system being adapted for transmitting over a communications network a first update of a status field of an object to a database system storing the object, the update indicating completion of a first phase of a first program component of the core system, the core system being adapted for initiating the second program component on the object in the database having its status field indicate completion of a second phase of the first program component, the second program component being communicatively independent of the first program component; and
- an action management system being adapted for executing a processing function on the object in the database system having its status field indicate completion of a first phase and being adapted for transmitting over the communications network a second update of the status, field vindicating completion of the second phase of the first program component to the database system, the processing function varying depending on the object, the core system and the action management system communicatively independent of each other.

6. The computer system of claim 5, wherein the execution of the processing function includes extracting data relating to the object and the first program component, restructuring the data into a format compatible with a third party computing system, transmitting the extracted data to the third party computing system over the communications network to obtain a result of further processing of the extracted data; and after receiving the result from the third part computing system, storing the result, wherein at least one of the systems is preferably connected to the communications network through a firewall system, wherein an upgrade to one of the action management system and the core system is preferably performed without having to modify the other system.

7. A data processing system comprising multiple cascaded computer systems of any one of the preceding claims 4 to 6, the first program component of one computer (j) of the cascade being adapted to receive a web services push message (816) from the second program component of a computer (i) of the cascade preceding the one computer, and being further adapted to start the execution of the first program component for performing the computational task in response to receipt of the web services push message.

8. A computer program product, in particular digital storage device, comprising computer executable instructions for performing a method of claim 1 .

## Patentansprüche

1. Computerimplementiertes Verfahren, das erste, zweite, dritte, vierte und fünfte Prozesse umfasst,
wobei der erste Prozess umfasst:
- Ausführen (902) einer ersten Programmkomponente (510) zur Durchführung einer Rechenaufgabe,
- Erzeugen einer Aufforderung zum Einstellen eines Zustands, der einen Abschluss der Rechenaufgabe anzeigt, durch die erste Programmkomponente nach Abschluss der Durchführung der Rechenaufgabe,
- Senden der Aufforderung von der ersten Programmkomponente zu einer Zustandsmaschine (806),
wobei der zweite Prozess umfasst:
- Empfangen der Aufforderung von der ersten Programmkomponente durch die Zustandsmaschine,
- Durchführen eines Datenbank-Schreibzugriffs durch die Zustandsmaschine als Antwort auf den Empfang der Anfrage von der ersten Programmkomponente, um einen Vorläufer (preX) des Zustands in eine Datenbanktabelle (810) zu schreiben (906),
- Durchführen (908) einer Datenbankabfrage duch die Zustandsmaschine, um eine Bedingung (816), die mit der Rechenaufgabe verknüpft ist, aus einer Datenbanktabelle (814) abzurufen,
- Bestimmen (910), ob die Datenbankabfrage die Bedingung ergeben hat,
- falls die Datenbankabfrage die Bedingung nicht ergeben hat:
a) Starten (914) eines Zeitnehmers (804);
b) Durchführen (916) eines Datenbankzugriffs zum Lesen des mindestens einen Parameterwerts aus einer Datenbanktabelle (814),
c) Bewerten (918) der Bedingung unter Verwendung mindestens eines Parameterwerts,
d) Bestimmen(920), ob die Bedingung wahr ist,
e) falls die Bedingung wahr ist, Durchführen eines Datenbank-Schreibzugriffs, um den Zustand in die Datenbanktabelle (810) zu schreiben, und Zurücksetzen (922) des Zeitnehmers,
f) falls die Bedingung nicht wahr ist, Aufrufen (924) des dritten Prozesses und Rückkehren zu Schritt b),
- falls die Datenbankabfrage die Bedingung nicht ergeben hat, Durchführen (912) eines Datenbank-Schreibzugriffs, um den Zustand in die Datenbanktabelle (810) zu schreiben,
wobei der dritte Prozess umfasst:
- Ausführen (928) einer dritten Programmkomponente zur Durchführung einer zusätzlichen Rechenaufgabe, wobei die zusätzliche Rechenaufgabe eine Modifikation von mindestens einem der Parameterwerte zum Ergebnis hat,
- Durchführen (930) eines Datenbank-Schreibzugriffs durch die dritte Programmkomponente zum Schreiben des mindestens einen modifizierten Parameterwerts in die Datenbanktabelle (814);
wobei der vierte Prozess umfasst:
- wiederholtes Lesen (932) des Zeitnehmerwerts des Zeitnehmers durch eine Überwachungsprogrammkomponente (802),
- Bestimmen (934), ob der Zeitnehmerwert einen vordefinierten Schwellenwert erreicht oder überschritten hat, und, falls dies der Fall ist, Erzeugen eines Signals, das die Erfüllung einer Zeitablaufbedingung anzeigt, um eine Endlosschleife seitens der Überwachungsprogrammkomponente zu verhindern,
wobei der fünfte Prozess umfasst:
- wiederholtes Durchführen einer Leseoperation an der Datenbanktabelle (810) zum Bestimmen, ob der Zustand eingestellt worden ist,
- Ausführen einer zweiten Programmkomponente (550) zur Durchführung einer weiteren Rechenaufgabe, falls der Zustand eingestellt worden ist.

2. Computerimplementiertes Verfahren nach Anspruch 1, das mehrmals hintereinander durch kaskadierte Computer ausgeführt wird, wobei die erste Programmkomponente eines Computers (j) aus der Kaskade dafür ausgelegt ist, eine Webservice-Push-Nachricht (816) von der zweiten Programmkomponente eines Computers (i) der Kaskade, der vor dem einen Computer kommt, zu empfangen, und das ferner einen Schritt umfasst, in dem die Ausführung der ersten Programmkomponente zur Durchführung der Rechenaufgabe als Antwort auf den Empfang der Webservice-Push-Nachricht gestartet wird.

3. Computerimplementiertes Verfahren nach Anspruch 2, wobei die zusätzliche Rechenaufgabe, die durch die dritte Programmkomponente ausgeführt wird, eine Fehlerkorrekturoperation umfasst.

4. Computersystem, eine erste Programmkomponente (510), eine zweite Programmkomponente (550), eine dritte Programmkomponente, eine Zustandsmaschine (806), eine Überwachungsprogrammkomponente (802), eine Systemuhr (808) und einen Zeitnehmer (804), der die Systemuhr nutzt, eine Speichereinrichtung (520) zum Speichern einer Datenbank und einen oder mehrere Prozessoren (800) zum Ausführen der ersten, zweiten dritten und Überwachungsprogrammkomponenten, der Zustandsmaschine und des Zeitnehmers umfassend, wobei der eine oder die mehreren Prozessoren in der Lage sind, ein Verfahren gemäß einem der vorangehenden Ansprüche durchzuführen.

5. Computersystem nach Anspruch 4, umfassend:
- ein Kernsystem, das die ersten und zweiten Programmkomponenten umfasst, wobei das Kernsystem dafür ausgelegt ist, über ein Kommunikationsnetz eine erste Aktualisierung eines Zustandsfelds eines Objekts an ein Datenbanksystem zu senden, in dem das Objekt gespeichert ist, wobei die Aktualisierung den Abschluss einer ersten Phase einer ersten Programmkomponente des Kernsystems anzeigt, wobei das Kernsystem dafür ausgelegt ist, die zweite Programmkomponente an dem Objekt in der Datenbank zu initiieren, dessen Zustandsfeld einen Abschluss der zweiten Phase der ersten Programmkomponente anzeigt, wobei die zweite Programmkomponente kommunikationsmäßig unabhängig ist von der ersten Programmkomponente; und
- ein Aktionsverwaltungssystem, das dafür ausgelegt ist, eine Verarbeitungsfunktion an dem Objekt in dem Datenbanksystem auszuführen, dessen Zustands feld einen Abschluss einer ersten Phase anzeigt, und das dafür ausgelegt ist, über das Kommunikationsnetz eine zweite Aktualisierung des Zustandsfelds, die einen Abschluss der zweiten Phase der ersten Programmkomponente anzeigt, an das Datenbanksystem zu senden, wobei die Verarbeitungsfunktion abhängig von dem Objekt, dem Kernsystem und dem Aktionsverwaltungssystem, die kommunikationsmäßig unabhängig voneinander sind, variiert.

6. Computersystem nach Anspruch 5, wobei die Ausführung der Verarbeitungsfunktion umfasst: Extrahieren von Daten in Bezug auf das Objekt und die erste Programmkomponente, Umstrukturieren der Daten in ein Format, das mit einem Rechensystem eines Dritten kompatibel ist, Senden der extrahierten Daten zu dem Rechensystem eines Dritten über das Kommunikationsnetz, um ein Ergebnis einer Weiterverarbeitung der extrahierten Daten zu erhalten; und, nach dem Empfang des Ergebnisses von dem Rechensystem eines Dritten, Speichern des Ergebnisses, wobei mindestens eines von den Systemen vorzugsweise über ein Firewall-System mit dem Kommunikationsnetz verbunden ist, wobei eine Aktualisierung am Aktionsverwaltungssystem oder am Kernsystem vorzugsweise durchgeführt wird, ohne das andere System modifizieren zu müssen.

7. Datenverarbeitungssystem, mehrere kaskadierte Computersysteme nach einem der vorangehenden Ansprüche 4 bis 6 umfassend, wobei die erste Programmkomponente eines Computers (j) aus der Kaskade dafür ausgelegt ist, eine Webservice-Push-Nachricht (816) von der zweiten Programmkomponente eines Computers (i) der Kaskade, der vor dem einen Computer kommt, zu empfangen, und das ferner dafür ausgelegt ist, die Ausführung der ersten Programmkomponente zur Durchführung der Rechenaufgabe als Antwort auf den Empfang der Webservice-Push-Nachricht zu starten.

8. Computerprogrammprodukt, insbesondere eine digitale Speichervorrichtung, computerausführbare Befehle zur Durchführung eines Verfahrens nach Anspruch 1 umfassend.

## Revendications

1. Procédé mis en ouvre par ordinateur, comprenant un premier, un deuxième, un troisième, un quatrième et un cinquième processus,
le premier processus comprenant :
- l'exécution (902) d'un premier composant de programme (510) pour l'exécution d'une tâche informatique,
- à la fin de l'exécution de la tâche informatique, la génération d'une demande pour définir un statut indiquant l'achèvement de la tâche informatique par le premier composant de programme,
- l'envoi de la demande du premier composant de programme vers une machine d'états (806),
le deuxième processus comprenant :
- la réception de la demande provenant du premier composant de programme par la machine d'états,
- en réponse à la réception de la demande provenant du premier composant de programme, l'exécution d'un accès en écriture à la base de données pour l'écriture (906) d'un précurseur (preX) du statut dans une table de base de données (810) par la machine d'états,
- l'exécution (908) d'une requête de base de données, pour rechercher une condition (816) attribuée à la tâche informatique à partir d'une table de base de données (814), par la machine d'états,
- la détermination (910) du renvoi de la condition par la requête de base de données,
- si la requête de base de données a renvoyé la condition, l'exécution des étapes suivante
a) démarrage (914) d'un minuteur (804),
b) exécution (916) d'un accès à la base de données pour lire l'au moins une valeur de paramètre à partir de la table de base de données (814),
c) évaluation (918) de la condition à l'aide de l'au moins une valeur de paramètre,
d) détermination (920) de la justesse de la condition,
e) si la condition est juste, exécution d'un accès en écriture à la base de données, pour inscrire le statut dans la table de base de données (810), et remise à zéro (922) du minuteur,
f) si la condition n'est pas juste, invocation (924) du troisième processus et retour à l'étape b),
- si la requête de base de données n'a pas renvoyé la condition, l'exécution (912) d'un accès en écriture à la base de données pour inscrire le statut dans la table de base de données (810),
le troisième processus comprenant :
- l'exécution (928) d'un troisième composant de programme pour l'exécution d'une tâche informatique supplémentaire, la tâche informatique supplémentaire résultant dans une modification d'au moins l'une des valeurs de paramètre,
- l'exécution (930) d'un accès en écriture à la base de données par le troisième composant de programme pour inscrire l'au moins une valeur de paramètre modifiée dans la table de base de données (814),
le quatrième processus comprenant :
- la lecture répétitive (932) de la valeur de minuteur du minuteur par un composant de programme de surveillance (802),
- la détermination (934) du fait que la valeur de minuteur a atteint ou dépassé une valeur seuil prédéfinie, et le cas échéant, la génération d'un signal indiquant la satisfaction d'une condition de temporisation pour empêcher le composant de programme de surveillance de fonctionner en boucle sans fin,
le cinquième processus comprenant :
- l'exécution répétitive d'une opération de lecture vers la table de base de données (810) pour déterminer si le statut a été défini,
- si le statut a été défini, l'exécution d'un deuxième composant de programme (550) pour l'exécution d'une autre tâche informatique.

2. Procédé mis en oeuvre par ordinateur selon la revendication 1, exécuté successivement de multiples fois par des ordinateurs en cascade, le premier composant de programme d'un ordinateur (j) de la cascade étant adapté pour recevoir un message push de services web (816) provenant du deuxième composant de programme d'un ordinateur (i) de la cascade en amont dudit ordinateur, et comprenant en outre une étape de démarrage de l'exécution du premier composant de programme, en vue de l'exécution de la tâche informatique en réponse à la réception du message push de services web.

3. Procédé mis en oeuvre par ordinateur selon la revendication 2, dans lequel la tâche informatique supplémentaire exécutée par le troisième composant de programme comprend une opération de correction d'erreurs.

4. Système informatique comprend un premier composant de programme (510), un deuxième composant de programme (550), un troisième composant de programme, une machine d'états (806), un composant de programme de surveillance (802), une horloge de système (808) et un minuteur (804) exploitant l'horloge de système, un moyen de stockage (520) pour le stockage d'une base de données, et un ou plusieurs processeurs (800) pour l'exécution des premier, deuxième, troisième composant de programme et le composant de programme de surveillance, de la machine d'états et du minuteur, les un ou plusieurs processeurs étant opérationnels pour exécuter un procédé selon l'une quelconque des revendications précédentes.

5. Système informatique selon la revendication 4, comprenant :
- un système central comprenant les premier et deuxième composants de programme, le système central étant adapté pour transmettre, par le biais d'un réseau de communications, une première mise à jour d'un champ de statut d'un objet, à un système de base de données stockant l'objet, la mise à jour indiquant l'achèvement d'une première phase d'un premier composant de programme du système central, le système central étant adapté pour initier le deuxième composant de programme sur l'objet dans la base de données dont le champ de statut indique l'achèvement d'une deuxième phase du premier composant de programme, le deuxième composant de programme n'étant pas en communication avec le premier composant de programme ; et
- un système de gestion d'actions, adapté pour l'exécution d'une fonction de traitement sur l'objet dans le système de base de données dont le champ de statut indique l'achèvement d'une première phase, et adapté pour transmettre, par le biais du réseau de communications, une deuxième mise à jour du champ de statut indiquant l'achèvement de la deuxième phase du premier composant de programme, au système de base de données, la fonction de traitement variant en fonction de l'objet, le système central et le système de gestion d'actions n'étant pas en communication l'un avec l'autre.

6. Système informatique selon la revendication 5, dans lequel l'exécution de la fonction de traitement inclut l'extraction de données relatives à l'objet et au premier composant de programme, la restructuration des données en un format compatible avec un système informatique tiers, la transmission des données extraites au système informatique tiers par le biais du réseau de communications, pour obtenir un résultat de traitement supplémentaire des données extraites ; et après réception du résultat provenant du système informatique tiers, le stockage du résultat, sachant qu'au moins l'un des systèmes est de préférence raccordé au réseau de communications par le biais d'un système de pare-feu, dans lequel une mise à niveau de l'un parmi le système de gestion d'actions et le système central est de préférence exécutée sans avoir à modifier l'autre système.

7. Système de traitement de données comprenant des systèmes à plusieurs ordinateurs en cascade selon l'une quelconque des revendications 4 à 6, le premier composant de programme d'un ordinateur (j) de la cascade étant adapté pour recevoir un message push de services web (816) provenant du deuxième composant de programme d'un ordinateur (i) de la cascade en amont dudit ordinateur, et étant en outre adapté pour démarrer l'exécution du premier composant de programme pour l'exécution de la tâche informatique en réponse à la réception du message push de services web.

8. Produit de programme informatique, en particulier un dispositif de stockage numérique, comprenant des instructions exécutables par ordinateur pour la mise en oeuvre d'un procédé selon la revendication 1.
